# EUROPÄISCHE PATENTANMELDUNG

(11) **EP 2 333 367 A1**
(43) Veröffentlichungstag der Anmeldung: **15.06.2011**
(21) Anmeldenummer: 10190844.0
(22) Anmeldetag: 11.11.2010
(51) Int. Cl.: F16C 33/58, F16C 33/66

(54) **Radial - Rollenwälzlager, insbesondere zur Wälzlagerung von Wellen in Verbrennungsmotoren**

(30) Priorität: 09.12.2009 DE 102009057634
(71) Anmelder: Schaeffler Technologies GmbH & Co. KG, 91074 Herzogenaurach (DE)
(72) Erfinder: Solfrank, Peter, Dr., 96158, Frensdorf (DE); Seitz, Joachim, 96132, Schlüsselfeld (DE); Ullmann, Patrick, 91074, Herzogenaurach (DE)

(57) **Zusammenfassung**

Die Erfindung betrifft ein Radial-Rollenwälzlager (1), insbesondere zur Wälzlagerung von Wellen in Verbrennungsmotoren, welches im Wesentlichen aus einem äußeren Lagerring (2) und einer Vielzahl zylindrischer Wälzkörper (3) besteht, die auf der als Außenlaufbahn (4) ausgebildeten Innenmantelfläche (5) des äußeren Lagerrings (2) sowie auf der als Innenlaufbahn (6) ausgebildeten Außenmantelfläche (7) eines inneren Lagerrings (8) oder einer zu lagernden Welle abrollen und in Umfangsrichtung durch einen Lagerkäfig (9) in gleichmäßigen Abständen zueinander gehalten werden, wobei am äußeren Lagerring (2) oder am inneren Lagerring (8) axial beidseitig nach innen gerichtete Radialborde (10, 11) zur axialen Führung der Wälzkörper (3) sowie von außen ins Lagerinnere führende Schmieröffnungen (12, 13) zur Schmierstoffzuführung angeordnet sind.

Erfindungsgemäß sind die Schmieröffnungen (12, 13) im äußeren oder inneren Lagerring (2, 8) als außerhalb der Lastzone (14, 15) der Lagerringe (2, 8) in eine oder in beide Axialseiten (16, 17, 18, 19) der Lagerringe (2, 8) eingearbeitete und sich bis in die Außen- oder Innenlaufbahn (4, 6) der Wälzkörper (3) erstreckende Aussparungen (20, 21, 22, 23) ausgebildet, in denen die Wälzkörper (3) zur Aufnahme von Spritzöl aus der Lagerumgebung partiell frei zugänglich sind.

## Beschreibung

Die Erfindung betrifft ein Radial-Rollenwälzlager nach den oberbegriffsbildenden Merkmalen des Patentanspruchs 1, und sie insbesondere vorteilhaft an Nadel- oder Zylinderrollenlagern zur Wälzlagerung von Wellen in Verbrennungsmotoren in ölnebel- oder spritzölbeladener Umgebung anwendbar.

### Hintergrund der Erfindung

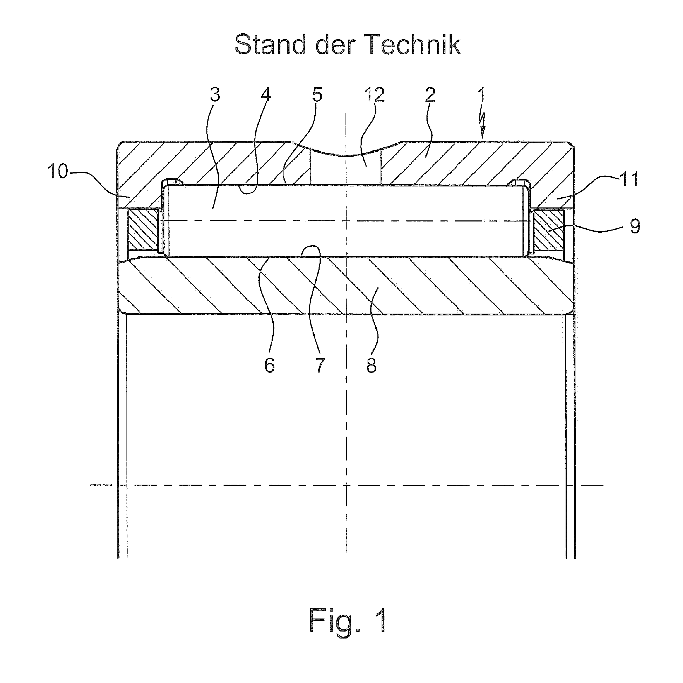

Für die Lagerung diverser Wellen in Verbrennungsmotoren, wie Kurbelwellen, Nockenwellen und Ausgleichswellen, werden in jüngster Zeit zur Reibungsreduzierung anstelle von Gleitlagerungen zunehmend Wälzlagerungen eingesetzt, die zumeist durch Radial-Rollenwälzlager gebildet werden. Neben Zylinderrollenlagern sowie Nadelhülsen und Nadelbüchsen haben sich dabei vor allem massive Nadellager als geeignetsten erwiesen, da diese eine hohe Tragfähigkeit aufweisen sowie radial sehr niedrig bauen und sich dadurch besonders für Konstruktionen mit begrenztem radialem Bauraum eignen. Derartige Nadellager sind unter anderem durch den von der Anmelderin herausgegebenen Katalog "Wälzlager" vom Januar 2006 bekannt und werden beispielsweise auf den Seiten 620 bis 655 in verschiedenen Ausführungsformen mit und ohne inneren Lagerring beschrieben. Die am häufigsten verwendete und in Figur 1 gezeigte Ausführungsform derartiger Nadellager 1 besteht dabei im Wesentlichen aus einem äußeren Lagerring 2 und aus einer Vielzahl zylindrischer Wälzkörper 3, die auf der als Außenlaufbahn 4 ausgebildeten Innenmantelfläche 5 des äußeren Lagerrings 2 sowie auf der als Innenlaufbahn 6 ausgebildeten Außenmantelfläche 7 eines inneren Lagerrings 8 abrollen und in Umfangsrichtung durch einen Lagerkäfig 9 in gleichmäßigen Abständen zueinander gehalten werden. Zur axialen Führung der Wälzkörper 3 sind dabei am äußeren Lagerring 2 axial beidseitig nach innen gerichtete Radialborde 10, 11 angeformt, an denen die Wälzkörper 3 mit ihren Stirnflächen anlaufen, wobei solche Radialborde wie bei Zylinderrollenlagern auch am inneren Lagerring 8 angeformt sein können. Da vor allem in Verbrennungsmotoren eine ausreichende Versorgung der Nadellager mit Schmierstoff wesentlich deren Lebensdauer beeinflusst und daher unbedingt erforderlich ist, sind darüber hinaus axial mittig am äußeren Lagerring 2 mehrere in Umfangsrichtung gleichmäßig beabstandete und als Durchgangsbohrungen ausgebildete Schmieröffnungen 12 angeordnet, die mit einer mit Drucköl beaufschlagten Versorgungsleitung im Lagergehäuse verbunden und zur Schmierstoffzuführung ins Lagerinnere vorgesehen sind. Durch andere Lagerausführungen ist es auch bekannt, solche Schmieröffnungen am inneren Lagerring oder auch an beiden Lagerringen vorzusehen.

In der Praxis hat es sich jedoch gezeigt, dass eine Druckbeölung der Lagerstellen in Verbrennungsmotoren mit dem vorhandenen Motoröl über eigens dafür vorgesehene Versorgungsleitungen und Kanäle relativ aufwendig und kostenintensiv ist und auch eine entsprechende Leistung der vorhandenen Ölpumpe voraussetzt, die andernfalls erst mit weiterem Aufwand gegen eine leistungsstärkere ausgetauscht werden muss. Ebenso besteht bei einer solchen Druckbeölung der Lagerstellen die Gefahr des Flutens des Wälzlagers mit Schmieröl, durch das der gewünschte Effekt der Reibungsminderung sich ins Gegenteil verkehrt und die Lagerreibung in erheblichem Ausmaß erhöht wird. Alternativ dazu würde sich zwar die Nutzung des Spritzöls aus der Lagerumgebung im Inneren des Verbrennungsmotors anbieten, allerdings bieten die bekannten Rollenwälzlager nicht die erforderliche Zugänglichkeit des Spritzöls ins Lagerinnere, da der Spalt zwischen dem an den Radialborden am äußeren Lagerring anliegenden Lagerkäfig und dem inneren Lagerring nicht so groß ist, dass ausreichend Spritzöl bis ins Lagerinnere dringen kann.

### Aufgabe der Erfindung

Ausgehend von den dargelegten Nachteilen des bekannten Standes der Technik liegt der Erfindung deshalb die Aufgabe zu Grunde, ein Radial-Rollenwälzlager, insbesondere zur Wälzlagerung von Wellen in Verbrennungsmotoren zu konzipieren, welches auf einfache und kostengünstige Weise jederzeit mit der erforderlichen Schmierung versorgt wird.

### Beschreibung der Erfindung

Erfindungsgemäß wird diese Aufgabe bei einem Radial-Rollenwälzlager nach dem Oberbegriff des Anspruchs 1 derart gelöst, dass die Schmieröffnungen im äußeren oder inneren Lagerring als außerhalb der Lastzone der Lagerringe in eine oder in beide Axialseiten der Lagerringe eingearbeitete und sich bis in die Außen- oder Innenlaufbahn der Wälzkörper erstreckende Aussparungen ausgebildet sind, in denen die Wälzkörper zur Aufnahme von Spritzöl aus der Lagerumgebung partiell frei zugänglich angeordnet sind.

Der Erfindung liegt somit die Erkenntnis zugrunde, dass es durch einfach und kostengünstig herstellbare Aussparungen am äußeren oder inneren Lagerring möglich ist, die Wälzkörper des Rollenwälzlagers soweit partiell freizulegen, dass diese jederzeit mit ausreichend Spritzöl aus der Lagerumgebung versorgt werden können. Um dabei ein Überrollen der Aussparungen durch die Wälzkörper in der Lastzone der Lagerringe und damit eine Beeinträchtigung der Lagerfunktion zu vermeiden, ist deren Position an den Lagerringen in Umfangsrichtung abhängig von der jeweiligen Lastrichtung in der vorgesehenen Anwendung. Gleichzeitig bestimmen die jeweiligen Umlaufverhältnisse in der Anwendung, ob die Aussparungen am äußeren oder am inneren Lagerring anzuordnen sind. So wird in der Regel bei feststehendem äußeren Lagerring und rotierendem inneren Lagerring sowie bei einer auf den inneren Lagerring wirkenden Punktlast nur der äußere Lagerring auf der der Punktlast gegenüberliegenden Seite mit den Aussparungen ausgebildet. Ebenso wird bei feststehendem inneren Lagerring und rotierendem äußeren Lagerring sowie bei einer auf den äußeren Lagerring wirkenden Punktlast nur der innere Lagerring an der der Punktlast gegenüberliegenden Seite mit den Aussparungen ausgebildet. Wirkt jedoch wie bei der Lagerung von Ausgleichswellen in Verbrennungsmotoren eine durch eine Unwucht erzeugte Umfangslast auf einen der beiden Lagerringe, ist darauf zu achten, dass bei Verbindung der Unwucht mit dem rotierenden äußeren Lagerring nur der äußere Lagerring auf der Seite der wirkenden Unwucht mit den Aussparungen ausgebildet werden kann, während bei Verbindung der Unwucht mit dem rotierenden inneren Lagerring nur der innere Lagerring auf der der wirkenden Unwucht gegenüberliegenden Seite mit den Aussparungen ausgebildet werden kann. Dadurch steht den Wälzkörpern in der jeweiligen Lastzone immer die volle Laufbahnbreite an beiden Lagerringen zur Verfügung.

Bevorzugte Ausgestaltungen und vorteilhafte Weiterbildungen des erfindungsgemäß ausgebildeten Radial-Rollenwälzlagers werden in den Unteransprüchen beschrieben.

Danach ist es gemäß Anspruch 2 bei dem erfindungsgemäß ausgebildeten Radial-Rollenwälzlager vorgesehen, dass der äußere Lagerring oder der innere Lagerring an beiden Axialseiten jeweils drei als Aussparungen ausgebildete Schmieröffnungen aufweist. Dadurch weist der äußere oder der innere Lagerring insgesamt sechs solcher Aussparungen auf, die sich in der Regel als ausreichend zur Aufnahme von Spritzöl für die Lagerschmierung durch die Wälzkörper erwiesen haben. Je nach Größe des Lagers kann die Anzahl der Aussparungen an einem der beiden Lagerringe jedoch sowohl nach oben als auch nach unten abweichen. Ebenso ist es möglich, nur an einer Axialseite des äußeren oder des inneren Lagerrings die Aussparungen anzuordnen, wenn die entsprechende Lagerstelle ohnehin nur einseitig von Spritzöl erreichbar ist.

Gemäß den Ansprüchen 3 und 4 zeichnet sich das erfindungsgemäß ausgebildete Wälzlager darüber hinaus noch dadurch aus, dass jeweils zwei der drei Aussparungen an jeder Axialseite der Lagerringe auf einer Lagerquerachse sich gerade gegenüberliegend angeordnet sind und dass jeweils eine der drei Aussparungen an jeder Axialseite der Lagerringe gegenüber deren Lastzone auf einer Lagersenkrechten angeordnet ist. Die zwei Aussparungen auf der Lagerquerachse weisen somit zu der Aussparung auf der Lagersenkrechten einen Abstand von 90° auf, während gegenüber der auf der Lagersenkrechten angeordneten Aussparung die ohne Aussparung ausgebildete Lastzone des Lagerrings angeordnet ist. Eine solche Anordnung der Aussparungen an den Lagerringen stellt jedoch nur eine bevorzugte Ausbildung dar und schließt nicht aus, die Aussparungen auch mit anderen Abständen zueinander anzuordnen.

Eine zweckmäßige Weiterbildung des erfindungsgemäß ausgebildeten Wälzlagers ist es nach Anspruch 5 desweiteren, dass die Aussparungen in den Lagerringen jeweils eine etwa dem Achsabstand zweier benachbarter Wälzkörper entsprechende Breite aufweisen. Dadurch soll sicher gestellt werden, dass das in die Aussparungen eindringende Spritzöl zwischen zwei Wälzkörpern bis in die Lagermitte vordringen kann und somit alle Lagerbereiche gleichmäßig beölt werden. Auch hier ist es jedoch möglich, die Breite der Aussparungen nach oben oder unten zu variieren, wobei einer Variation nach unten bzw. einer schmalen Ausführung der Aussparungen dahingehend Grenzen gesetzt sind, dass bei einer zu schmalen Ausführung der Aussparungen die Menge des eindringend Spritzöls zu gering für eine ausreichend Lagerschmierung sein kann.

Schließlich wird es als vorteilhafte Ausgestaltung des erfindungsgemäß ausgebildeten Wälzlagers durch Anspruch 6 noch vorgeschlagen, dass die Aussparungen in den Lagerringen rechteckförmig ausgebildet sind und jeweils eine etwa einem Drittel der Breite der Lagerringe entsprechende Tiefe aufweisen. Auch diese Ausbildung hat sich als Optimum erwiesen um sicher zu stellen, dass das in die Aussparungen eindringende Spritzöl bis in die Lagermitte vordringen kann und somit alle Lagerbereiche gleichmäßig beölt werden. Möglich sind jedoch auch hier abweichende Formen der Aussparungen, beispielsweise eine halbkreis- oder trapezförmige Ausbildung, und/oder auch abweichende Tiefen der Aussparungen, wenn dies zur weiteren Verbesserung der Lagerschmierung beiträgt.

### Kurze Beschreibung der Zeichnungen

Das erfindungsgemäß ausgebildete Radial-Rollenwälzlager wird nachfolgend in zwei bevorzugten Ausführungsformen unter Bezugnahme auf die beigefügten Zeichnungen näher erläutert. Dabei zeigen:
- Figur 1: einen vergrößerten Querschnitt durch ein massives Nadellager nach dem Stand der Technik;
- Figur 2: eine Sprengdarstellung einer ersten Ausführungsform eines erfindungsgemäß ausgebildeten massiven Nadellagers;
- Figur 3: eine Sprengdarstellung einer zweiten Ausführungsform eines erfindungsgemäß ausgebildeten massiven Nadellagers.

### Ausführliche Beschreibung der Zeichnungen

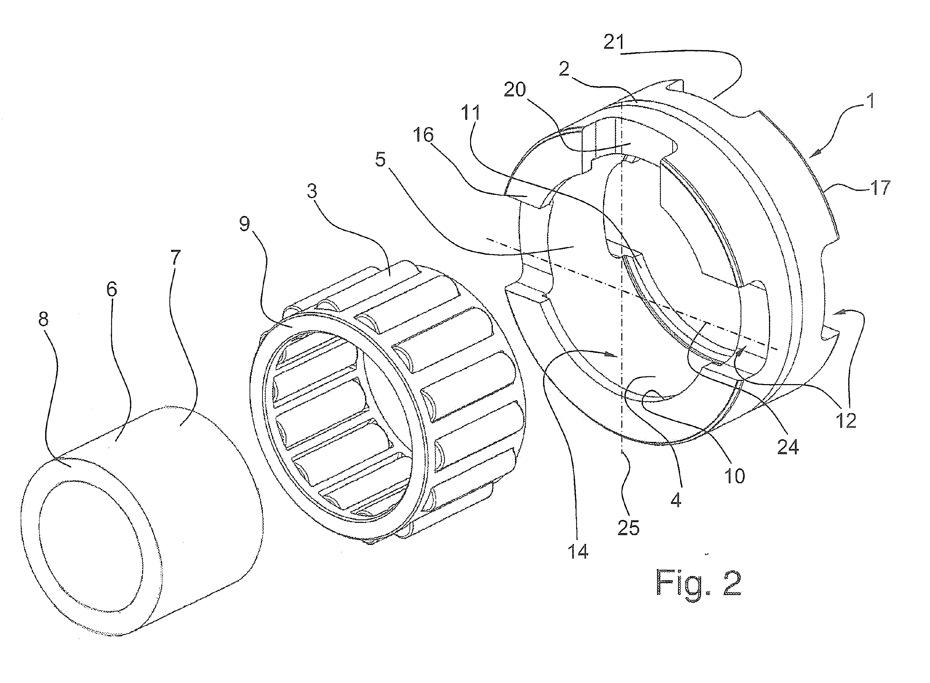

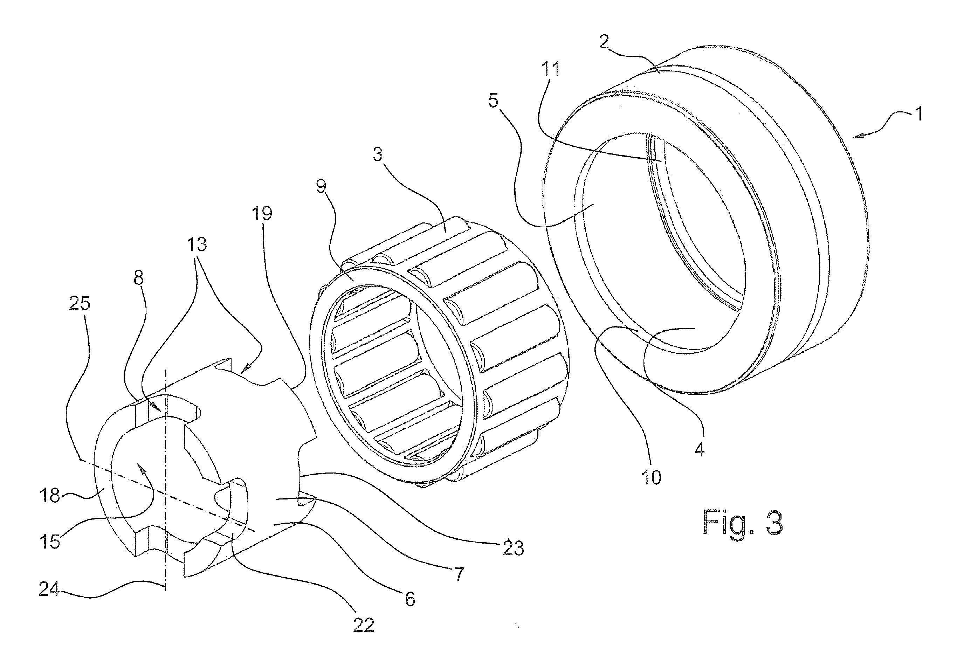

In den Figuren 2 und 3 ist jeweils eine Sprengdarstellung eines als massives Nadellager ausgebildeten Radial-Rollenwälzlagers 1 zu sehen, welches im Wesentlichen aus einem äußeren Lagerring 2 und einer Vielzahl zylindrischer Wälzkörper 3 besteht, die auf der als Außenlaufbahn 4 ausgebildeten Innenmantelfläche 5 des äußeren Lagerrings 2 sowie auf der als Innenlaufbahn 6 ausgebildeten Außenmantelfläche 7 eines inneren Lagerrings 8 abrollen und in Umfangsrichtung durch einen Lagerkäfig 9 in gleichmäßigen Abständen zueinander gehalten werden. Dabei sind am äußeren Lagerring 2 axial beidseitig nach innen gerichtete Radialborde 10, 11 zur axialen Führung der Wälzkörper 3 angeordnet, an denen die Wälzkörper 3 mit ihren Stirnflächen anlaufen.

Darüber hinaus geht aus den Figuren 2 und 3 deutlich hervor, dass das in Figur 2 gezeigte Radial-Rollenwälzlager 1 von außen ins Lagerinnere führende Schmier-öffnungen 12 und das in Figur 2 gezeigte Radial-Rollenwälzlagers 1 von außen ins Lagerinnere führende Schmieröffnungen 13 zur Schmierstoffzuführung aufweist, die erfindungsgemäß als außerhalb der Lastzone 14, 15 der Lagerringe 2, 8 in beide Axialseiten 16, 17 und 18, 19 der Lagerringe 2, 8 eingearbeitete Aussparungen 20, 21 und 22, 23 ausgebildet sind. Deutlich sichtbar sind dabei jeweils drei als Aussparungen 20, 21 und 22, 23 ausgebildete Schmieröffnungen 12, 13 in den äußeren Lagerring 2 oder den inneren Lagerring 8 eingearbeitet, die sich bis in die Außenlaufbahn 4 oder Innenlaufbahn 6 der Wälzkörper 3 an den Lagerringen 2, 8 erstrecken und somit die Wälzkörper 3 zur Aufnahme von Spritzöl aus der Lagerumgebung partiell frei zugänglich machen.

Schließlich ist aus den Figuren 2 und 3 noch ersichtlich, dass jeweils zwei der drei Aussparungen 20, 21 an den Axialseiten 16, 17 des äußeren Lagerring 2 und zwei der drei Aussparungen 22, 23 an den Axialseiten 18, 19 des inneren Lagerrings 8 auf einer strichpunktiert dargestellten Lagerquerachse 24 sich gerade gegenüberliegend angeordnet sind, während jeweils eine der drei Aussparungen 20, 21 an den Axialseiten 16, 17 des äußeren Lagerring 2 und eine der drei Aussparungen 22, 23 an den Axialseiten 18, 19 des inneren Lagerrings 8 gegenüber deren Lastzone 14, 15 auf einer ebenfalls strichpunktiert dargestellten Lagersenkrechten 25 angeordnet ist. Sämtliche Aussparungen 20, 21, 22, 23 in den Lagerringen 2, 8 sind dabei rechteckförmig ausgebildet und weisen jeweils eine etwa dem Achsabstand zweier benachbarter Wälzkörper 3 entsprechende Breite sowie jeweils eine etwa einem Drittel der Breite der Lagerringe 2, 8 entsprechende Tiefe auf.

### Bezugszahlenliste

- 1: Radial-Rollenwälzlager
- 2: äußerer Lagerring
- 3: Wälzkörper
- 4: Außenlaufbahn von 3
- 5: Innenmantelfläche von 2
- 6: Innenlaufbahn von 3
- 7: Außenmantelfläche von 8
- 8: innerer Lagerring
- 9: Lagerkäfig
- 10: Radialbord an 2
- 11: Radialbord an 2
- 12: Schmieröffnungen in 2
- 13: Schmieröffnungen in 8
- 14: Lastzone an 2
- 15: Lastzone an 8
- 16: Axialseite von 2
- 17: Axialseite von 2
- 18: Axialseite von 8
- 19: Axialseite von 8
- 20: Aussparungen in 16
- 21: Aussparungen in 17
- 22: Aussparungen in 18
- 23: Aussparungen in 19
- 24: Lagerquerachse
- 25: Lagersenkrechte

## Patentansprüche

1. Radial-Rollenwälzlager (1), insbesondere zur Wälzlagerung von Wellen in Verbrennungsmotoren, im Wesentlichen bestehend aus einem äußeren Lagerring (2) und einer Vielzahl zylindrischer Wälzkörper (3), die auf der als Außenlaufbahn (4) ausgebildeten Innenmantelfläche (5) des äußeren Lagerrings (2) sowie auf der als Innenlaufbahn (6) ausgebildeten Außenmantelfläche (7) eines inneren Lagerrings (8) oder einer zu lagernden Welle abrollen und in Umfangsrichtung durch einen Lagerkäfig (9) in gleichmäßigen Abständen zueinander gehalten werden, wobei am äußeren Lagerring (2) oder am inneren Lagerring (8) axial beidseitig nach innen gerichtete Radialborde (10, 11) zur axialen Führung der Wälzkörper (3) sowie von außen ins Lagerinnere führende Schmieröffnungen (12, 13) zur Schmierstoffzuführung angeordnet sind, **dadurch gekennzeichnet, dass** die Schmieröffnungen (12, 13) im äußeren oder inneren Lagerring (2, 8) als außerhalb der Lastzone (14, 15) der Lagerringe (2, 8) in eine oder in beide Axialseiten (16, 17, 18, 19) der Lagerringe (2, 8) eingearbeitete und sich bis in die Außen- oder Innenlaufbahn (4, 6) der Wälzkörper (3) erstreckende Aussparungen (20, 21, 22, 23) ausgebildet sind, in denen die Wälzkörper (3) zur Aufnahme von Spritzöl aus der Lagerumgebung partiell frei zugänglich angeordnet sind.

2. Radial-Rollenwälzlager (1) nach Anspruch 1, **dadurch gekennzeichnet, dass** der äußere Lagerring (2) oder der innere Lagerring (8) an beiden Axialseiten (16, 17 oder 18, 19) jeweils drei als Aussparungen (20, 21 oder 22, 23) ausgebildete Schmieröffnungen (12 oder 13) aufweist.

3. Radial-Rollenwälzlager (1) nach Anspruch 2, **dadurch gekennzeichnet, dass** jeweils zwei der drei Aussparungen (20, 21, 22, 23) an den Axialseiten (16, 17 oder 18, 19) der Lagerringe (2 oder 8) auf einer Lagerquerachse (24) sich gerade gegenüberliegend angeordnet sind.

4. Radial-Rollenwälzlager (1) nach Anspruch 2, **dadurch gekennzeichnet, dass** jeweils eine der drei Aussparungen (20, 21 oder 22, 23) an jeder Axialseite (16, 17 oder 18, 19) der Lagerringe (2 oder 8) gegenüber deren Lastzone (14, 15) auf einer Lagersenkrechten (25) angeordnet ist.

5. Radial-Rollenwälzlager (1) nach Anspruch 2, **dadurch gekennzeichnet, dass** die Aussparungen (20, 21 oder 22, 23) in den Lagerringen (2 oder 8) jeweils eine etwa dem Achsabstand zweier benachbarter Wälzkörper (3) entsprechende Breite aufweisen.

6. Radial-Rollenwälzlager (1) nach Anspruch 2, **dadurch gekennzeichnet, dass** die Aussparungen (20, 21 oder 22, 23) in den Lagerringen (2 oder 8) rechteckförmig ausgebildet sind und jeweils eine etwa einem Drittel der Breite der Lagerringe (2 oder 8) entsprechende Tiefe aufweisen.
